# EUROPÄISCHE PATENTSCHRIFT

(11) **EP 3 640 004 B1**
(45) Veröffentlichungstag und Bekanntmachung des Hinweises auf die Patenterteilung: **15.11.2023**
(21) Anmeldenummer: 18200572.8
(22) Anmeldetag: 16.10.2018
(51) Int. Cl.: B29C 48/09, F16L 11/10, B29C 48/34, B29C 48/154, B29C 48/155, B29C 48/16, B29C 48/285, B29C 48/00, B29C 44/32

(54) **SCHLAUCHLEITUNG UND VERFAHREN ZUR HERSTELLUNG EINER SCHLAUCHLEITUNG**
FLEXIBLE HOSE AND METHOD FOR MANUFACTURING SAME
CONDUITE SOUPLE ET PROCÉDÉ DE FABRICATION D'UNE CONDUITE SOUPLE

(43) Veröffentlichungstag der Anmeldung: 22.04.2020
(73) Patentinhaber: Schauenburg Ruhrkunststoff GmbH, 45478 Mülheim (DE)
(72) Erfinder: GADOW, Wolfgang, 52399 Merzenich (DE)
(74) Vertreter: Andrejewski - Honke Patent- und Rechtsanwälte Partnerschaft mbB

(56) Entgegenhaltungen:
- JP-A- S4 941 456
- JP-A- S5 615 328
- JP-A- 2000 028 083
- JP-A- 2011 242 052
- JP-U- S5 317 919
- JP-U- S57 127 981
- US-A- 3 289 703
- US-A1- 2008 072 985

## Beschreibung

Die Erfindung betrifft eine Schlauchleitung - insbesondere einen Belüftungsschlauch - zur Führung eines fluiden Mediums, vorzugsweise eines gasförmigen Mediums, mit einer Schlauchwandung und einem von der Schlauchwandung umgebenen Fluidkanal. Die Erfindung betrifft außerdem ein Verfahren zur Herstellung einer solchen Schlauchleitung sowie eine Verwendung der Schlauchleitung.

Schlauchleitungen der eingangs genannten Art sind aus der Praxis und aus dem Stand der Technik in unterschiedlichen Ausführungsformen grundsätzlich bekannt. Sie kommen beispielsweise in Gebäuden zur Führung von Zu- und/oder Abluft zum Einsatz und werden üblicherweise in Gebäudewänden oder hinter Wandverkleidungen von Gebäuden verlegt. Beispielsweise beschreibt US 2008/0072985 A1 eine flexible Schlauchleitung mit einer Verstärkungswendel, die bezüglich ihres Querschnittsumfanges zumindest bereichsweise in die Schlauchwandung eingebettet ist. Solche Schlauchleitungen bzw. Belüftungsschläuche müssen verschiedenste Anforderungen erfüllen. Beispielsweise ist es notwendig, dass die Schlauchleitungen ausreichend flexibel sind, damit sie an ihrem Einsatzort ohne Probleme auch auf beengtem Raum verlegt bzw. angeordnet werden können. Fernerhin ist es oftmals notwendig, dass die Schlauchleitungen bzw. Belüftungsschläuche eine Isolationswirkung, insbesondere eine thermische und/oder akustische Isolationswirkung besitzen. Darüber hinaus werden an die mechanische Stabilität der Schlauchleitungen bzw. der Belüftungsschläuche und an ihre Resistenz gegenüber äußeren Beanspruchungen zusätzliche Anforderungen gestellt um die Langlebigkeit der Schläuche zu gewährleisten.

Die aus der Praxis bekannten Schlauchleitungen bzw. Belüftungsschläuche können diese Anforderungen oftmals nicht in zufriedenstellender Art und Weise erfüllen. Es hat sich insbesondere gezeigt, dass die Optimierung einer Eigenschaft der Schlauchleitungen bzw. der Belüftungsschläuche zumeist zu Lasten einer anderen Eigenschaft geht. Beispielsweise führt eine Verbesserung der Isolationswirkung der Schlauchleitungen häufig zu einer verminderten Flexibilität, sodass die Einsatzmöglichkeiten der Schlauchleitungen eingeschränkt sind. Andererseits führt eine Erhöhung der Flexibilität bei den aus der Praxis bekannten Schlauchleitungen bzw. Belüftungsschläuchen häufig zu einer deutlich verschlechterten Isolationswirkung und zu einer Beeinträchtigung der mechanischen Stabilität. Insoweit besteht Verbesserungsbedarf.

Demgegenüber liegt der Erfindung das technische Problem zugrunde, eine Schlauchleitung der eingangs genannten Art anzugeben, bei der die vorstehend beschriebenen Nachteile einfach und funktionssicher vermieden werden können und die sich sowohl durch eine zufriedenstellende Flexibilität, als auch durch eine vorteilhaft hohe Isolationswirkung auszeichnet und die fernerhin ausreichend resistent gegenüber mechanischen Beanspruchungen ist. Der Erfindung liegt weiterhin das technische Problem zugrunde, ein Verfahren zur Herstellung einer solchen Schlauchleitung anzugeben.

Zur Lösung des technischen Problems lehrt die Erfindung eine Schlauchleitung gemäß Patentanspruch 1.

Fluides Medium meint im Rahmen der Erfindung insbesondere ein gasförmiges Medium, bei dem es sich vorzugsweise um Luft oder ein Luftgemisch handelt. Gemäß bevorzugter Ausführungsform handelt es sich bei der erfindungsgemäßen Schlauchleitung um einen Belüftungsschlauch, der insbesondere in Gebäuden eingesetzt wird und in diesem Zusammenhang ist das fluide Medium, das in dem Fluidkanal des Belüftungsschlauchs geführt wird, vorzugsweise Zu- und/oder Abluft der Gebäude. Grundsätzlich kann es sich bei dem fluiden Medium, das durch die Schlauchleitung bzw. durch den Belüftungsschlauch geführt wird, auch um ein flüssiges Medium, beispielsweise um Wasser oder eine wässrige Lösung handeln. Gemäß besonders bevorzugter Ausführungsform ist das fluide Medium aber ein Gasgemisch bzw. Luft.

Erfindungsgemäß weist die Schlauchleitung zumindest eine Schaumschicht auf Basis zumindest eines polymeren Kunststoffschaumes auf. Polymerer Kunststoffschaum meint im Rahmen der Erfindung insbesondere einen aufgeschäumten polymeren Kunststoff. Radiale Dicke meint hier und nachfolgend insbesondere die Dicke bzw. Stärke quer bzw. senkrecht zur Längsmittelachse der Schlauchleitung. Mit dem Begriff Querschnittsumfang der Verstärkungswendel ist im Rahmen der Erfindung insbesondere der Umfang der Querschnittsfläche der Verstärkungswendel gemeint. Der prozentual angegebene Teil des Querschnittsumfangs meint also den prozentualen Teil des Umfangs der Querschnittsfläche der Verstärkungswendel.

Erfindungsgemäß beträgt der Anteil der radialen Dicke (ds) der Schaumschicht an der radialen Wandungsdicke (d) der Schlauchwandung zumindest 60 %, vorzugsweise zumindest 70 %. Eine besonders empfohlene Ausführungsform der Erfindung ist dadurch gekennzeichnet, dass der Anteil der radialen Dicke (ds) der Schaumschicht an der radialen Wandungsdicke (d) der Schlauchwandung zumindest 80 %, vorzugsweise zumindest 85 %, bevorzugt zumindest 90 % und insbesondere zumindest 95 % beträgt. Dieser Ausführungsform liegt die Erkenntnis zugrunde, dass durch die zumindest eine Schaumschicht ein guter Kompromiss zwischen einer zufriedenstellenden Isolationswirkung und einer ausreichenden Flexibilität der Schlauchleitung bzw. des Belüftungsschlauches ermöglicht wird. Gemäß einer sehr bevorzugten Ausführungsform der Erfindung beträgt der Anteil der radialen Dicke (ds) der Schaumschicht an der radialen Wandungsdicke (d) der Schlauchwandung mehr als 95 %, zweckmäßigerweise mehr als 97 % und insbesondere 100 % bzw. etwa 100 %. Besonders bevorzugt besteht die Schlauchwandung aus der Schaumschicht bzw. im Wesentlichen aus der Schaumschicht. Dieser Ausführungsvariante kommt im Rahmen der Erfindung besondere Bedeutung zu.

Eine sehr empfohlene Ausführungsform der Erfindung ist dadurch gekennzeichnet, dass der polymere Kunststoffschaum auf Basis zumindest eines thermoplastischen Kunststoffes bzw. eines thermoplastischen Polymeres ausgebildet ist. Es liegt im Rahmen der Erfindung, dass es sich bei dem zumindest einen thermoplastischen Kunststoff um zumindest einen Kunststoff aus der Gruppe: "Acrylnitril-Butadien-Styrol, Polylactid, Polymethylmethacrylat, Polycarbonat, Polyethylenterephthalat, Polypropylen, Polystyrol, Polyetheretherketon, Polyvinylchlorid, thermoplastisches Polyurethan, Polyethylen" ausgewählten Kunststoff handelt. Besonders bevorzugt ist der polymere Kunststoffschaum auf Basis zumindest eines Kunststoffes aus der Gruppe "Polyvinylchlorid, thermoplastisches Polyurethan, Polyethylen" ausgebildet.

Es liegt im Rahmen der Erfindung, dass die Schaumschicht bzw. der polymere Kunststoffschaum der Schaumschicht eine Härte von 20 bis 55 Shore A, insbesondere von 20 bis 50 Shore A, vorzugsweise von 25 bis 50 Shore A, zweckmäßigerweise von 25 bis 45 Shore A und sehr bevorzugt von 30 bis 45 Shore A aufweist. Weiterhin liegt es im Rahmen der Erfindung, dass die Schaumschicht bzw. der polymere Kunststoffschaum der Schaumschicht eine Dichte von 0,4 bis 0,8 g/cm³ und insbesondere eine Dichte von 0,45 bis 0,75 g/cm³ aufweist. Gemäß empfohlener Ausführungsform der Erfindung beträgt das Porenvolumen der Schaumschicht bzw. des polymeren Kunststoffschaumes der Schaumschicht 10 bis 90 %, insbesondere 30 bis 80 %, bevorzugt 35 bis 75 % und besonders bevorzugt 40 bis 70 %.

Erfindungsgemäß bildet die Schaumschicht die Innenoberfläche der Schlauchwandung, die bevorzugt in direktem Kontakt zu dem in dem Fluidkanal geführten fluiden Medium steht. Dann bildet die Schaumschicht gleichsam die innerste Schicht bzw. die innere Abschlussschicht der Schlauchwandung. Eine empfohlene Ausführungsform der Erfindung ist dadurch gekennzeichnet, dass die vorzugsweise von der Schaumschicht gebildete Innenoberfläche der Schlauchwandung als raue bzw. unebene Innenoberfläche ausgebildet ist. Dieser Ausführungsform liegt die Erkenntnis zugrunde, dass die Unebenheiten in der Innenoberfläche der Schlauchwandung zur Schallisolierung beitragen. Grundsätzlich liegt es auch im Rahmen der Erfindung, dass die Innenoberfläche der Schlauchwandung glatt bzw. eben ausgebildet ist.

Eine mögliche erfindungsgemäße Lösung ist dadurch gekennzeichnet, dass die Verstärkungswendel über ihren gesamten Querschnittsumfang in die Schlauchwandung bzw. in die Schaumschicht eingebettet ist. Zweckmäßigerweise erstreckt sich diese vollständige Einbettung der Verstärkungswendel über zumindest 90 %, vorzugsweise über zumindest 95 % der Länge der Verstärkungswendel. Es empfiehlt sich, dass sich diese vollständige Einbettung der Verstärkungswendel über die gesamte Länge der Verstärkungswendel bzw. im Wesentlichen über die gesamte Länge der Verstärkungswendel erstreckt. Es liegt im Rahmen der Erfindung, dass die Verstärkungswendel eine runde, insbesondere eine kreisrunde Querschnittsfläche aufweist. Grundsätzlich kann die Verstärkungswendel aber auch eine andere Querschnittsfläche bzw. Querschnittsflächengeometrie aufweisen, beispielsweise eine ovale, dreieckige, viereckige, polygonale oder dergleichen Querschnittsfläche bzw. Querschnittsflächengeometrie. Vorzugsweise ist die Verstärkungswendel über ihren gesamten Querschnittsumfang in die Schlauchwandung bzw. in die Schaumschicht eingesetzt und bevorzugt ist der Mittelpunkt (M) des Verstärkungswendelquerschnittes bezüglich der radialen Wandungsdicke (d) der Schlauchwandung bzw. der Schaumschicht in der mittleren Hälfte und sehr bevorzugt im mittleren Drittel der Schlauchwandung bzw. der Schaumschicht angeordnet. Gemäß einer empfohlenen Ausführungsform ist der Mittelpunkt (M) bezüglich der radialen Wandungsdicke (d) im mittleren Viertel und insbesondere mittig bzw. im Wesentlichen mittig in der Schlauchwandung bzw. in der Schaumschicht angeordnet. Mittelpunkt (M) des Verstärkungswendelquerschnittes meint in diesem Zusammenhang insbesondere den Mittelpunkt der Querschnittsfläche der Verstärkungswendel, also im Falle einer kreisrunden Querschnittsfläche den Kreismittelpunkt. Dass der Mittelpunkt (M) des Verstärkungswendelquerschnittes bezüglich der radialen Wandungsdicke (d) vorzugsweise in der mittleren Hälfte und sehr bevorzugt im mittleren Drittel der Schlauchwandung bzw. der Schaumschicht angeordnet ist meint insbesondere, dass sich der Mittelpunkt (M) des Verstärkungswendelquerschnittes in einem Abschnitt der radialen Wandungsdicke (d) der Schlauchwandung befindet, der der Hälfte bzw. einem Drittel der radialen Wandungsdicke (d) entspricht und symmetrisch bezüglich der radialen Mitte der Schlauchwandung angeordnet ist.

Gemäß einer alternativen erfindungsgemäßen Lösung ist die Verstärkungswendel an der Innenoberfläche der Schlauchwandung bzw. an der Innenoberfläche der Schaumschicht angeordnet und bezüglich ihres Querschnittsumfanges lediglich teilweise in die Schlauchwandung bzw. in die Schaumschicht eingebettet. Im Rahmen dieser Ausführungsform ist die Verstärkungswendel bezüglich ihres Querschnittsumfanges vorzugsweise über weniger als 95 %, insbesondere über weniger als 70 % oder über weniger als 50 %, oder über weniger als 30 % in die Schlauchwandung bzw. in die Schaumschicht eingebettet. Es liegt im Rahmen der Erfindung, dass die Verstärkungswendel eine Kunststoffummantelung aufweist. Vorzugsweise ist dann die Kunststoffummantelung der Verstärkungswendel mit der Innenoberfläche bzw. mit der Außenoberfläche der Schlauchwandung bzw. der Schaumschicht verschweißt. Zweckmäßigerweise erstreckt sich die teilweise Einbettung der Verstärkungswendel in die Schlauchwandung bzw. in die Schaumschicht über zumindest 90 %, bevorzugt über zumindest 95 % der Länge der Verstärkungswendel. Empfohlenermaßen erstreckt sich die teilweise Einbettung der Verstärkungswendel in die Schlauchwandung bzw. in die Schaumschicht über die gesamte Länge bzw. im Wesentlichen über die gesamte Länge der Verstärkungswendel. - Wenn die Verstärkungswendel gemäß der vorstehend beschriebenen Ausführungsform an der Innenoberfläche der Schlauchwandung bzw. der Schaumschicht angeordnet ist und bezüglich ihres Querschnittsumfanges lediglich teilweise in die Schlauchwandung bzw. in die Schaumschicht eingebettet ist, dann ragt ein Teil des Querschnittsumfanges der Verstärkungswendel in den Fluidkanal der Schlauchleitung.

Erfindungsgemäß ist die radiale Dicke (d_{W}) der Verstärkungswendel geringer, als die radiale Wandungsdicke (d) der Schaumschicht. Zweckmäßigerweise beträgt die radiale Dicke (d_{W}) der Verstärkungswendel zwischen 2 % und 95 %, vorzugsweise zwischen 2 % und 60 %, bevorzugt zwischen 5 % und 30 %, besonders bevorzugt zwischen 10 % und 25 % der radialen Wandungsdicke (d) der Schlauchwandung. Gemäß einer sehr empfohlenen Ausführungsform der Erfindung beträgt die radiale Dicke (d_{W}) der Verstärkungswendel zwischen 5 % und 50 %, insbesondere zwischen 5 % und 25 % der radialen Wandungsdicke (d) der Schlauchwandung. Radiale Dicke (d_{W}) der Verstärkungswendel meint in diesem Zusammenhang insbesondere die Dicke bzw. Stärke der Verstärkungswendel quer bzw. senkrecht zur Längsmittelachse der Schlauchleitung. Im Falle einer Verstärkungswendel mit kreisförmiger Querschnittsfläche meint die radiale Dicke (d_{W}) folglich den Durchmesser der kreisförmigen Querschnittsfläche der Verstärkungswendel. Grundsätzlich liegt es im Übrigen auch im Rahmen der Erfindung, dass die radiale Dicke (d_{W}) der Verstärkungswendel größer ist, als die radiale Wandungsdicke (d) der Schlauchwandung bzw. der Schaumschicht.

Eine empfohlene Ausführungsform der Erfindung ist dadurch gekennzeichnet, dass der Innendurchmesser (dᵢ) der Schlauchleitung bzw. des Fluidkanals zwischen 3 mm und 250 mm, vorzugsweise zwischen 5 mm und 200 mm, bevorzugt zwischen 6 mm und 180 mm beträgt. Innendurchmesser (dᵢ) meint in diesem Zusammenhang insbesondere den Innendurchmesser der Schlauchleitung quer bzw. senkrecht zur Längsmittelachse der Schlauchleitung. Zweckmäßigerweise beträgt die radiale Wandungsdicke (d) der Schlauchwandung zwischen 0,1 mm und 30 mm, insbesondere zwischen 0,2 mm und 20 mm, vorzugsweise zwischen 0,3 mm und 15 mm, bevorzugt zwischen 0,4 mm und 12 mm, besonders bevorzugt zwischen 0,5 mm und 10 mm. Gemäß einer sehr empfohlenen Ausführungsform der Erfindung beträgt die radiale Wandungsdicke (d) 1,5 bis 15 mm, insbesondere 1,5 bis 10 mm.

Es liegt im Rahmen der Erfindung, dass die Schaumschicht eine Vielzahl von Poren aufweist, wobei zumindest 65 % der Poren, vorzugsweise zumindest 75 % der Poren, als geschlossene Poren ausgebildet sind und wobei bevorzugt im Bereich der Innenoberfläche des Fluidkanals offene Poren angeordnet sind. Gemäß einer bevorzugten Ausführungsform sind zumindest 80 % der Poren und insbesondere zumindest 85 % der Poren als geschlossene Poren ausgebildet. Gemäß einer Ausführungsvariante sind die Poren der Schaumschicht vollständig bzw. im Wesentlichen vollständig als geschlossene Poren ausgebildet. Es liegt auch im Rahmen der Erfindung, dass ein Teil der Poren als offene Poren ausgebildet ist. Wie bereits oben ausgeführt sind vorzugsweise im Bereich der Innenoberfläche der Schlauchwandung bzw. der Schaumschicht offene Poren angeordnet. Eine solche Anordnung offener Poren im Bereich der Innenoberfläche kann zu der bereits oben erwähnten rauen Struktur der Innenoberfläche führen bzw. beitragen. Wenn die Schaumschicht neben geschlossenen Poren auch offene Poren aufweist, dann können diese offenen Poren beispielsweise dazu dienen, einen Teil des in dem Fluidkanal geführten Fluides durch die Schlauchwandung hindurch nach außen zu leiten. Dieser Ausführungsform kommt beispielsweise Bedeutung zu, wenn die Schlauchleitung als Bewässerungsschlauch, etwa in Gärten bzw. Grünanlagen zum Einsatz kommt. Es liegt insoweit auch grundsätzlich im Rahmen der Erfindung, dass die Schaumschicht eine Vielzahl von offenen Poren aufweist.

Nach einer Ausführungsform der Erfindung ist die Außenoberfläche und/oder die Innenoberfläche der Schlauchwandung bzw. der Schaumschicht glatt ausgebildet bzw. geglättet ausgeführt und wurde vorzugsweise durch Hitzeeinwirkung geglättet. Zweckmäßigerweise wird die Außenoberfläche und/oder die Innenoberfläche der Schlauchwandung bzw. der Schaumschicht dazu durch ein erhitztes Werkzeug teilweise angeschmolzen und auf diese Weise geglättet, sodass eine glatte, ebene Außenoberfläche bzw. Innenoberfläche resultiert.

Es liegt im Rahmen der Erfindung, dass die Schlauchwandung eine Außenschicht aufweist, die außenseitig über der Schaumschicht angeordnet ist. Bei einer solchen Außenschicht kann es sich im Rahmen der Erfindung um eine Abschlussschicht handeln, die die Schlauchwandung bzw. die Schlauchleitung zusätzlich schützt. Durch eine Außenschicht kann fernerhin erreicht werden, dass die Außenoberfläche der Schlauchleitung bzw. der Schlauchwandung glatt bzw. eben ausgebildet ist. Es liegt im Rahmen der Erfindung, dass die Außenschicht auf Basis eines polymeren Kunststoffes, vorzugsweise auf Basis von Polyurethan ausgebildet ist. Zweckmäßigerweise ist die Außenschicht unmittelbar außenseitig über der Schaumschicht angeordnet. Gemäß einer alternativen Ausführungsvariante der Erfindung ist zwischen der Außenschicht und der Schaumschicht zumindest eine weitere Schicht vorgesehen.

Grundsätzlich liegt es auch im Rahmen der Erfindung, dass die Schlauchwandung eine Innenschicht aufweist, die innenseitig über der Schaumschicht angeordnet ist. Bei einer solchen Innenschicht kann es sich im Rahmen der Erfindung um eine innere Abschlussschicht handeln, die die Innenseite der Schlauchwandung bzw. der Schlauchleitung zusätzlich schützt und gleichsam in direktem Kontakt zu dem in dem Fluidkanal geführten fluiden Medium steht. Durch eine solche Innenschicht kann erreicht werden, dass die Innenoberfläche der Schlauchleitung bzw. der Schlauchwandung glatt bzw. eben ausgebildet ist. Es liegt im Rahmen der Erfindung, dass die Innenschicht auf Basis eines polymeren Kunststoffes, vorzugsweise auf Basis von Polyurethan ausgebildet ist. Zweckmäßigerweise ist die Innenschicht unmittelbar innenseitig über der Schaumschicht angeordnet. Gemäß einer alternativen Ausführungsvariante der Erfindung ist zwischen der Innenschicht und der Schaumschicht zumindest eine weitere Schicht vorgesehen.

Eine besonders empfohlene Ausführungsform der Erfindung ist dadurch gekennzeichnet, dass die Schlauchwandung zumindest eine Armierungsschicht aufweist, wobei die Armierungsschicht vorzugsweise als Armierungsgeflecht ausgebildet ist und besonders bevorzugt außenseitig über der Schaumschicht angeordnet ist. Es liegt auch im Rahmen der Erfindung, dass zumindest eine Armierungsschicht innenseitig über der Schaumschicht angeordnet ist. Durch eine solche Armierungsschicht kann eine Verstärkung der mechanischen Stabilität bzw. Resistenz der Schlauchleitung gegenüber äußeren Einflüssen erreicht werden. Das vorzugsweise vorgesehene Armierungsgeflecht besteht zweckmäßigerweise aus Armierungsfäden, die in Längsrichtung der Schlauchleitung angeordnet sind und aus weiteren Armierungsfäden, die die Schlauchleitung radial umlaufen. Vorzugsweise ist die zumindest eine Armierungsschicht bzw. das zumindest eine Armierungsgeflecht außenseitig und/oder innenseitig über der Schaumschicht angeordnet. Wenn gemäß einer Ausführungsform zusätzlich eine Außenschicht auf der Schaumschicht vorgesehen ist, dann ist diese Außenschicht zweckmäßigerweise außenseitig über der Armierungsschicht bzw. über dem Armierungsgeflecht angeordnet. Wenn gemäß einer weiteren Ausführungsvariante der Erfindung eine zusätzliche Innenschicht innenseitig über der Schaumschicht vorgesehen ist, dann ist diese Innenschicht gemäß einer Ausführungsform innenseitig über einer Armierungsschicht bzw. einem Armierungsgeflecht angeordnet, so dass die Armierungsschicht bzw. das Armierungsgeflecht insbesondere zwischen der Schaumschicht und der Innenschicht angeordnet ist. Es liegt weiterhin im Rahmen der Erfindung, dass die zumindest eine Armierungsschicht bzw. das Armierungsgeflecht die Außenschicht und/oder die Innenschicht der Schlauchwandung bildet.

Gemäß einer Ausführungsvariante ist die Schlauchwandung elektrisch leitfähig ausgebildet ist. Dazu kann die gesamte Schlauchwandung oder es können lediglich einzelne Schichten der Schlauchwandung mit leitfähigen Zusatzstoffen versehen sein. Grundsätzlich können alle Schichten der Schlauchwandung mit leitfähigen Zusatzstoffen versehen werden. Gemäß einer Ausführungsform ist die zumindest eine Schaumschicht der Schlauchwandung mit leitfähigen Zusatzstoffen versehen. Es liegt auch im Rahmen der Erfindung, dass die Armierungsschicht bzw. das Armierungsgeflecht leitfähig ausgebildet ist. Dazu kann die Armierungsschicht leitfähige Zusatzstoffe enthalten. Wenn die Armierungsschicht gemäß einer Ausführungsform als Armierungsgeflecht ausgebildet ist, können die Fäden des Armierungsgeflechtes aus einem elektrisch leitfähigen Material bestehen bzw. ein elektrisch leitfähiges Material enthalten. Gemäß einer weiteren Ausführungsvariante der Erfindung ist die Schlauchwandung und/oder die zumindest eine Verstärkungswendel geerdet.

Eine empfohlene Ausführungsform der Erfindung zeichnet sich dadurch aus, dass der axiale Abstand (a) zweier benachbarter Verstärkungswendelabschnitte das 1,5-fache bis 40-fache, bevorzugt das 2-fache bis 30-fache, besonders bevorzugt das 4-fache bis 20-fache und insbesondere das 5-fache bis 15-fache, beispielsweise das 10-fache der radialen Dicke (d_{W}) der Verstärkungswendel beträgt. Axialer Abstand (a) meint in diesem Zusammenhang insbesondere den Abstand parallel zur Längsmittelachse der Schlauchleitung bzw. den axialen Abstand in der Projektion auf die Längsmittelachse der Schlauchleitung. Fernerhin bezieht sich der axiale Abstand (a) im Rahmen der Erfindung insbesondere auf die Mittelpunkte (M) der Verstärkungswendelquerschnitte zweier benachbarter Verstärkungswendelabschnitte.

Es empfiehlt sich, dass die Verstärkungswendel aus Metall, vorzugsweise aus einem Stahl, besteht bzw. im Wesentlichen besteht. Gemäß einer bevorzugten Ausführungsform der Erfindung besteht die Verstärkungswendel aus einem verzinkten Stahl bzw. im Wesentlichen aus einem verzinkten Stahl. Es liegt weiterhin im Rahmen der Erfindung, dass die Verstärkungswendel aus Edelstahl besteht bzw. im Wesentlichen besteht. Eine Ausführungsvariante der Erfindung ist dadurch gekennzeichnet, dass die Verstärkungswendel aus Metall, vorzugsweise aus Stahl besteht bzw. im Wesentlichen besteht und fernerhin eine Kunststoffummantelung aufweist. Grundsätzlich kann die Verstärkungswendel auch vollständig bzw. im Wesentlichen vollständig aus Kunststoff gefertigt sein. Zweckmäßigerweise besitzt das Material der Verstärkungswendel eine höhere Härte als das zumindest eine Material der Schlauchwandung bzw. der Schaumschicht.

Zur Lösung des technischen Problems lehrt die Erfindung weiterhin ein Verfahren zur Herstellung einer Schlauchleitung gemäß Patentanspruch 16.

Es liegt im Rahmen des erfindungsgemäßen Verfahrens, dass der polymere Kunststoffschaum während des Extrusionsschrittes aus einem polymeren Kunststoff gebildet wird, wobei der polymere Kunststoff vorzugsweise mittig eines Schäumungsgases und/oder durch Zugabe zumindest eines Schäumungsadditives aufgeschäumt wird. Zweckmäßigerweise schäumt der polymere Kunststoff beim Austritt aus der Extrusionsdüse auf. Diese Aufschäumung kann im Rahmen der Erfindung durch ein Schäumungsgas und/oder durch Zugabe zumindest eines Schäumungsadditives erreicht werden. Bei dem Schäumungsgas kann es sich beispielsweise um Luft und/oder Stickstoff und/oder Kohlenstoffdioxid handeln. Die Schäumungsadditive bewirken üblicherweise eine Freisetzung eines Gases durch Reaktion mit zumindest einer Komponente des polymeren Kunststoffes bzw. mit einem weiteren Additiv innerhalb des polymeren Kunststoffes. Gemäß einer Ausführungsform handelt es sich bei dem zumindest einen Schäumungsadditiv um Wasser. Dieser Ausführungsform kommt insbesondere dann Bedeutung zu, wenn es sich bei dem zumindest einem polymeren Kunststoff um ein Polyurethan bzw. um ein thermoplastisches Polyurethan handelt.

Es empfiehlt sich, dass die Verstärkungswendel im Zuge Ihrer kontinuierlichen Fortbewegung entlang ihrer Längsachse über einen Dorn durch den Extrusionskopf bzw. durch die Extrusionsdüse geführt wird.

Zur Lösung des technischen Problems lehrt die Erfindung weiterhin die Verwendung einer Schlauchleitung der vorstehend beschriebenen Art. - insbesondere hergestellt durch ein vorstehend beschriebenes Verfahren - als Belüftungsschlauch, vorzugsweise als Belüftungsschlauch für Gebäude. Der Belüftungsschlauch wird zweckmäßigerweise in Gebäudewandungen und/oder hinter Wandverkleidungen in Gebäuden eingesetzt um fluide Medien, insbesondere Gase bzw. Gasgemische, bevorzugt Luft zu führen. Dabei kann es sich beispielsweise um Zu- und/oder Abluft handeln. Aufgrund der erfindungsgemäßen Ausgestaltung und insbesondere durch die erfindungsgemäße Schaumschicht ist der Belüftungsschlauch ausreichend flexibel und mechanisch stabil und es kann gleichzeitig eine überraschend hohe thermische und/oder akustische Isolation bzw. Isolationswirkung erzielt werden.

Der Erfindung liegt die Erkenntnis zugrunde, dass die erfindungsgemäße Schlauchleitung bzw. der erfindungsgemäße Belüftungsschlauch einen optimalen Kompromiss zwischen ausreichender Flexibilität, mechanischer Stabilität und gleichzeitig hoher Isolationswirkung ermöglicht. Die zumindest eine Schaumschicht der Schlauchwandung ist insbesondere in Kombination mit der erfindungsgemäßen Verstärkungswendel im Wesentlichen verantwortlich für den Erfolg der Erfindung. Es resultiert eine Schlauchleitung, die eine überraschend hohe thermische und akustische Isolationswirkung besitzt und gleichzeitig sowohl ausreichend flexibel, als auch resistent gegenüber mechanischen Beanspruchungen ist. Ein solcher Kompromiss konnte mit den aus der Praxis bekannten Maßnahmen bisher nicht erreicht werden. Insbesondere ist es mit den erfindungsgemäßen Maßnahmen möglich, die einzelnen Eigenschaften der Schlauchleitung bzw. des Belüftungsschlauches zu verändern bzw. zu optimieren, ohne dass dies zulasten einer der weiteren positiven Eigenschaften der Schlauchleitung geht. Insoweit ermöglicht es die Erfindung, dass die erfindungsgemäße Schlauchleitung bzw. der erfindungsgemäße Belüftungsschlauch den an sie gestellten Anforderungen optimal genügt. Mittels des erfindungsgemäßen Verfahrens kann eine solche Schlauchleitung fernerhin mit hoher Wirtschaftlichkeit hergestellt werden und es ist weiterhin zu erwähnen, dass durch die spezielle Relativbewegung zwischen dem Extrusionskopf mit einer Extrusionsdüse ein vorteilhaft gleichmäßiger und kontrollierbarer Auftrag zumindest einer Schaumschicht auf die Verstärkungswendel möglich ist. Es ist auch darauf hinzuweisen, dass die erfindungsgemäßen Maßnahmen sich durch eine besondere Einfachheit auszeichnen, sodass die erfindungsgemäße Schlauchleitung mit wenig aufwendigen und kostengünstigen Mitteln herstellbar ist.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht einer erfindungsgemäßen Schlauchleitung,
- Fig. 2: einen Längsschnitt durch eine erfindungsgemäße Schlauchleitung und
- Fig. 3: eine schematische Darstellung einer Vorrichtung zur Durchführung des erfindungsgemäßen Verfahrens zur Herstellung der Schlauchleitung.

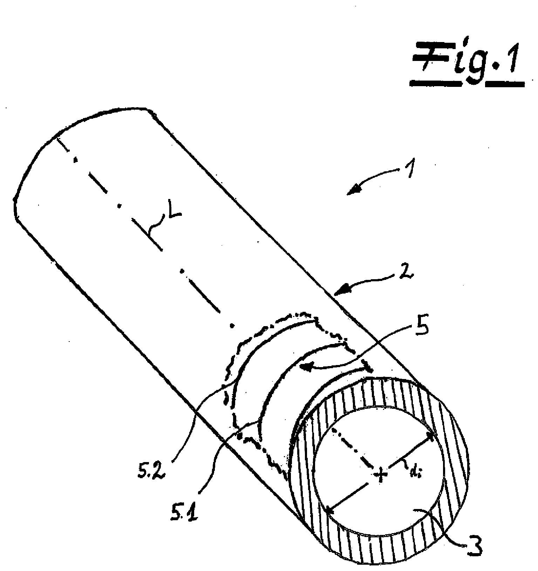

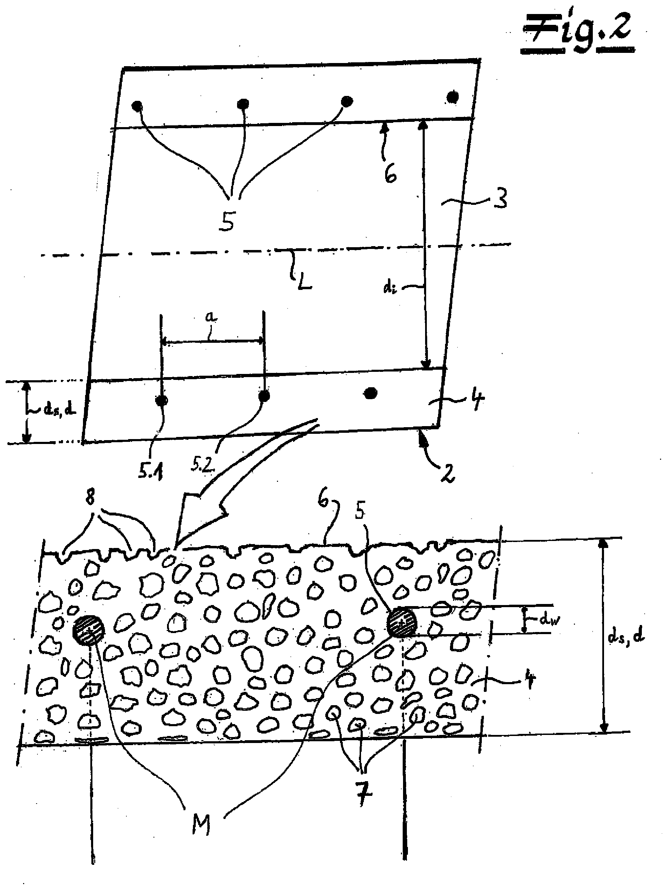

Die Figuren 1 und 2 zeigen eine erfindungsgemäße Schlauchleitung **1** zur Führung eines fluiden Mediums mit einer Schlauchwandung **2** und einem von der Schlauchwandung **2** umgebenen Fluidkanal **3.** Die Schlauchwandung **2** weist erfindungsgemäß zumindest eine Schaumschicht **4** auf Basis zumindest eines polymeren Kunststoffschaumes auf. Vorzugsweise und im Ausführungsbeispiel gemäß den Figuren 1 und 2 beträgt der Anteil der radialen Dicke der Schaumschicht **4** an der radialen Wandungsdicke der Schlauchwandung **2** 100 %, so dass die radiale Dicke der Schaumschicht **4** der gesamten radialen Wandungsdicke der Schlauchwandung **2** entspricht. Somit bildet bevorzugt und im Ausführungsbeispiel die Schaumschicht **4** die Schlauchwandung **2.** Radiale Wandungsdicke der Schlauchwandung **2** meint in diesem Zusammenhang im Übrigen insbesondere die Dicke bzw. Stärke der Schlauchwandung **2** quer bzw. senkrecht zur Längsmittelachse L der Schlauchleitung **1.** Radiale Dicke der Schaumschicht **4** meint insbesondere die Dicke bzw. Stärke der Schaumschicht **4** quer bzw. senkrecht zur Längsmittelachse L der Schlauchleitung **1.**

Erfindungsgemäß weist die Schlauchleitung **1** fernerhin eine Verstärkungswendel **5** auf. Zweckmäßigerweise und im Ausführungsbeispiel ist die Verstärkungswendel **5** über ihren gesamten Querschnittsumfang in die Schlauchwandung **2** bzw. in die Schaumschicht **4** eingebettet.

Empfohlenermaßen ist der polymere Kunststoffschaum der Schaumschicht **4** auf Basis zumindest eines thermoplastischen Kunststoffes ausgebildet. Im Ausführungsbeispiel gemäß den Figuren mag der polymere Kunststoffschaum beispielsweise auf Basis von Polyvinylchlorid ausgebildet sein. Gemäß besonders bevorzugter Ausführungsvariante und im Ausführungsbeispiel bildet die Schaumschicht **4** die Innenoberfläche **6** der Schlauchwandung **2,** die empfohlenermaßen und im Ausführungsbeispiel in direktem Kontakt zu dem in dem Fluidkanal **3** geführten fluiden Medium steht.

Vorzugsweise weist die Verstärkungswendel **5** eine kreisrunde Querschnittsfläche auf. Dies ist insbesondere in der Fig. 2 zu erkennen. Empfohlenermaßen und im Ausführungsbeispiel ist der Mittelpunkt des Verstärkungswendelquerschnittes bezüglich der radialen Wandungsdicke der Schlauchwandung **2** in der mittleren Hälfte, vorzugsweise im mittleren Drittel der Schlauchwandung **2** bzw. der Schaumschicht **4** angeordnet. Im Ausführungsbeispiel gemäß den Figuren ist der Mittelpunkt des Verstärkungswendelquerschnittes bezüglich der radialen Wandungsdicke der Schlauchwandung **2** bzw. der Schaumschicht **4** im mittleren Drittel angeordnet. Mittelpunkt des Verstärkungswendelquerschnittes meint hier den Mittelpunkt der Querschnittsfläche der Verstärkungswendel **5** und somit bei der kreisrunden Querschnittsfläche im Ausführungsbeispiel den Kreismittelpunkt. Dass sich der Mittelpunkt des Verstärkungswendelquerschnittes bezüglich der radialen Wandungsdicke der Schlauchwandung **2** im mittleren Drittel befindet, meint hier, dass sich der Mittelpunkt in einem Abschnitt der radialen Wandungsdicke der Schlauchwandung **2** befindet, der einem Drittel der radialen Wandungsdicke der Schlauchwandung **2** entspricht und zentriert um die radiale Mitte der Schlauchwandung **2** angeordnet ist.

Empfohlenermaßen und im Ausführungsbeispiel ist die radiale Dicke der Verstärkungswendel **5** geringer, als die radiale Wandungsdicke der Schlauchwandung **2.** Radiale Dicke der Verstärkungswendel **5** meint in diesem Zusammenhang die Dicke bzw. Stärke der Verstärkungswendel **5** senkrecht zur Längsmittelachse L der Schlauchleitung. Wenn die Verstärkungswendel **5** gemäß empfohlener Ausführungsform und im Ausführungsbeispiel eine kreisrunde Querschnittsfläche aufweist, dann entspricht die radiale Dicke der Verstärkungswendel **5** dem Durchmesser der Querschnittsfläche der Verstärkungswendel. Gemäß empfohlener Ausführungsvariante beträgt die radiale Dicke der Verstärkungswendel **5** zwischen 5 % und 30 %, besonders bevorzugt zwischen 10 % und 25 % der radialen Wandungsdicke der Schlauchwandung **2.** Im Ausführungsbeispiel (s. insbesondere Fig. 2) mag die radiale Dicke der Verstärkungswendel **5** etwa 15 % der radialen Wandungsdicke der Schlauchwandung **2** betragen.

Es empfiehlt sich, dass der Innendurchmesser der Schlauchleitung **1** bzw. des Fluidkanals **3** zwischen 5 mm und 200 mm, bevorzugt zwischen 6 mm und 180 mm beträgt. Innendurchmesser der Schlauchleitung **1** bzw. des Fluidkanals **3** meint in diesem Zusammenhang insbesondere den Innendurchmesser der Schlauchleitung **1** bzw. des Fluidkanals **3** quer bzw. senkrecht zur Längsmittelachse L der Schlauchleitung **1.** Im Ausführungsbeispiel gemäß den Figuren beträgt der Innendurchmesser etwa 25 mm. Zweckmäßigerweise liegt die radiale Wandungsdicke der Schlauchwandung **2** zwischen 0,4 mm und 12 mm, bevorzugt zwischen 0,5 mm und 10 mm. Im Ausführungsbeispiel beträgt die radiale Wandungsdicke der Schlauchwandung etwa 6 mm.

Empfohlenermaßen und im Ausführungsbeispiel weist die Schaumschicht **4** eine Vielzahl von Poren auf, wobei zweckmäßigerweise zumindest 75 % der Poren als geschlossene Poren **7** ausgebildet sind und wobei besonders bevorzugt im Bereich der Innenoberfläche **6** des Fluidkanals **3** offene Poren **8** angeordnet sind. Nach bevorzugter Ausführungsform und im Ausführungsbeispiel sind zumindest 90 % der Poren als geschlossene Poren **7** ausgebildet.

Zweckmäßigerweise und im Ausführungsbeispiel beträgt der axiale Abstand zweier benachbarter Verstärkungswendelabschnitte **5.1, 5.2** das 4-fache bis 20-fache, bevorzugt das 5-fache bis 15-fache der radialen Dicke der Verstärkungswendel **5.** Axialer Abstand meint in diesem Zusammenhang insbesondere den Abstand parallel zur Längsmittelachse L der Schlauchleitung **1** bzw. den Abstand in der Projektion auf die Längsmittelachse L der Schlauchleitung **1.** Fernerhin bezieht sich der Abstand im Rahmen der Erfindung insbesondere auf die Mittelpunkte der Verstärkungswendelquerschnitte der beiden benachbarten Verstärkungswendelabschnitte **5.1, 5.2.** Im Ausführungsbeispiel beträgt der axiale Abstand zweier benachbarter Verstärkungswendelabschnitte **5.1, 5.2** etwa das 12-fache der radialen Dicke der Verstärkungswendel **5.**

Zweckmäßigerweise besteht die Verstärkungswendel **5** aus Metall, vorzugsweise aus einem Stahl. Im Ausführungsbeispiel gemäß den Figuren mag die Verstärkungswendel **5** aus einem verzinkten Stahl bestehen bzw. im Wesentlichen bestehen.

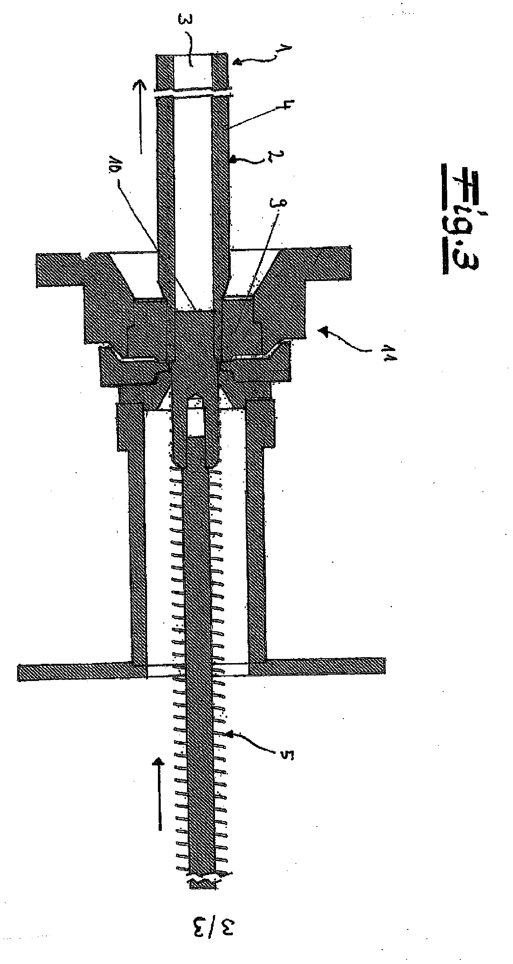

Die Fig. 3 zeigt schematisch eine Vorrichtung zur Durchführung des erfindungsgemäßen Verfahrens zur Herstellung einer erfindungsgemäßen Schlauchleitung **1.** Erfindungsgemäß wird zumindest eine Verstärkungswendel **5** bereitgestellt. Anschließend wird zur Erzeugung einer Schlauchwandung **2** zumindest eine Schaumschicht **4** durch Extrusion zumindest eines polymeren Kunststoffschaumes auf bzw. um die Verstärkungswendel **5** aufgebracht. Erfindungsgemäß erfolgt fernerhin während der Extrusion eine Relativbewegung zwischen der Verstärkungswendel **5** und einem Extrusionskopf **11** mit einer Extrusionsdüse **9.**

Zweckmäßigerweise und im Ausführungsbeispiel bewegt sich der Extrusionskopf **11** bzw. die Extrusionsdüse **9** entlang des Außenumfanges der Verstärkungswendel **5** auf einer im Wesentlichen kreisförmigen Bahn. Die Verstärkungswendel **5** bewegt bzw. dreht sich im Ausführungsbeispiel nicht um ihre Längsachse. Vorzugsweise und im Ausführungsbeispiel wird die Verstärkungswendel **5** entlang ihrer Längsachse kontinuierlich fortbewegt. Dies ist in der Fig. 3 durch Pfeile angedeutet. Empfohlenermaßen und im Ausführungsbeispiel wird die Verstärkungswendel **5** im Zuge ihrer kontinuierlichen Fortbewegung entlang ihrer Längsachse über einen Dorn **10** durch den Extrusionskopf **11** geführt. Zweckmäßigerweise und im Ausführungsbeispiel wird der polymere Kunststoffschaum während des Extrusionsschrittes aus dem polymeren Kunststoff gebildet, wobei der polymere Kunststoff vorzugsweise durch ein Schäumungsgas und/oder durch Zugabe zumindest eines Schäumungsadditives aufgeschäumt wird.

## Patentansprüche

1. Schlauchleitung (1) - insbesondere Belüftungsschlauch - zur Führung eines fluiden Mediums, mit einer Schlauchwandung (2) und einem von der Schlauchwandung (2) umgebenen Fluidkanal (3), wobei die Schlauchwandung (2) zumindest eine Schaumschicht (4) auf Basis zumindest eines polymeren Kunststoffschaumes aufweist, wobei der Anteil der radialen Dicke (ds) der Schaumschicht (4) an der radialen Wandungsdicke (d) der Schlauchwandung (2) zumindest 60 %, vorzugsweise zumindest 70 %, beträgt und wobei die Schlauchleitung (1) zumindest eine Verstärkungswendel (5) aufweist, die bezüglich ihres Querschnittsumfanges zumindest bereichsweise in die Schlauchwandung (2), vorzugsweise in die zumindest eine Schaumschicht (4) der Schlauchwandung (2), eingebettet ist,
wobei die Schaumschicht (4) die Innenoberfläche (6) der Schlauchwandung (2) bildet,
wobei die radiale Dicke (d_{w}) der Verstärkungswendel (5) geringer ist als die radiale Wandungsdicke (d) der Schaumschicht (4), wobei die radiale Dicke (d_{w}) der Verstärkungswendel (5) zwischen 2 % und 30 % der radialen Wandungsdicke (d) der Schaumschicht (4) beträgt und wobei
entweder die Verstärkungswendel (5) über ihren gesamten Querschnittsumfang in die Schlauchwandung (2) bzw. in die Schaumschicht (4) eingebettet ist
oder wobei die Verstärkungswendel (5) an der Innenoberfläche (6) der Schlauchwandung (2) bzw. der Schaumschicht (4) angeordnet ist und bezüglich ihres Querschnittsumfanges lediglich teilweise in die Schlauchwandung (2) bzw. in die Schaumschicht (4) eingebettet ist.

2. Schlauchleitung nach Anspruch 1, wobei der polymere Kunststoffschaum auf Basis zumindest eines thermoplastischen Kunststoffes ausgebildet ist, vorzugsweise auf Basis zumindest eines aus der Gruppe: "Polyvinylchlorid, thermoplastisches Polyurethan, Polyethylen" ausgewählten Kunststoffes ausgebildet ist.

3. Schlauchleitung nach einem der Ansprüche 1 oder 2, wobei die Schaumschicht (4) in direktem Kontakt zu dem in dem Fluidkanal (3) geführten fluiden Medium steht.

4. Schlauchleitung nach einem der Ansprüche 1 bis 3, wobei der Mittelpunkt (M) des Verstärkungswendelquerschnittes bezüglich der radialen Wandungsdicke (d) der Schlauchwandung (2) bzw. der Schaumschicht (4) in der mittleren Hälfte, vorzugsweise im mittleren Drittel, besonders bevorzugt im mittleren Viertel und insbesondere mittig bzw. im Wesentlichen mittig in der Schlauchwandung (2) bzw. in der Schaumschicht (4) angeordnet ist.

5. Schlauchleitung nach einem der Ansprüche 1 bis 3, wobei die Verstärkungswendel (5) über weniger als 95 %, insbesondere über weniger als 70 % oder über weniger als 50 % ihres Querschnittsumfanges in die Schlauchwandung (2) bzw. in die Schaumschicht (4) eingebettet ist.

6. Schlauchleitung nach einem der Ansprüche 1 bis 5, wobei die radiale Dicke (d_{W}) der Verstärkungswendel (5) zwischen 5 % und 30 %, bevorzugt zwischen 10 % und 25 % der radialen Wandungsdicke (d) der Schaumschicht (4) beträgt.

7. Schlauchleitung nach einem der Ansprüche 1 bis 6, wobei der Innendurchmesser (dᵢ) der Schlauchleitung (1) bzw. des Fluidkanals (3) zwischen 3 mm und 250 mm, vorzugsweise zwischen 5 mm und 200 mm, bevorzugt zwischen 6 mm und 180 mm beträgt.

8. Schlauchleitung nach einem der Ansprüche 1 bis 7, wobei die radiale Wandungsdicke (d) der Schlauchwandung (2) bzw. der Schaumschicht (4) zwischen 0,1 mm und 30 mm, insbesondere zwischen 0,2 mm und 20 mm, vorzugsweise zwischen 0,3 mm und 15 mm, bevorzugt zwischen 0,4 mm und 12 mm, besonders bevorzugt zwischen 0,5 mm und 10 mm beträgt.

9. Schlauchleitung nach einem der Ansprüche 1 bis 8, wobei die Schaumschicht (4) eine Vielzahl von Poren aufweist, wobei zumindest 65 % der Poren, vorzugsweise zumindest 75 % der Poren als geschlossene Poren (7) ausgebildet sind und wobei bevorzugt im Bereich der an den Fluidkanal (3) angrenzenden Innenoberfläche (6) der Schaumschicht (4) offene Poren (8) angeordnet sind.

10. Schlauchleitung nach einem der Ansprüche 1 bis 9, wobei die Schaumschicht (4) bzw. der polymere Kunststoffschaum der Schaumschicht (4) eine Härte von 20 bis 55 Shore A, bevorzugt von 25 bis 50 Shore A und sehr bevorzugt von 30 bis 50 Shore A aufweist.

11. Schlauchleitung nach einem der Ansprüche 1 bis 10, wobei die Schaumschicht (4) bzw. der polymere Kunststoffschaum der Schaumschicht (4) eine Dichte von 0,4 bis 0,8 g/cm³, zweckmäßigerweise von 0,45 bis 0,75 g/cm³ aufweist.

12. Schlauchleitung nach einem der Ansprüche 1 bis 11, wobei die Schaumschicht (4) bzw. der polymere Kunststoffschaum der Schaumschicht (4) ein Porenvolumen von 10 bis 90 %, bevorzugt von 30 bis 80 %, besonders bevorzugt von 35 bis 75 % und ganz besonders bevorzugt von 40 bis 70 % aufweist.

13. Schlauchleitung nach einem der Ansprüche 1 bis 12, wobei der axiale Abstand (a) zweier benachbarter Verstärkungswendelabschnitte (5.1, 5.2) das 1,5-fache bis 40-fache, bevorzugt das 2-fache bis 30-fache, besonders bevorzugt das 4-fache bis 20-fache und ganz besonders bevorzugt das 5-fache bis 15-fache, beispielsweise das 10-fache der radialen Dicke (d_{W}) der Verstärkungswendel (5) beträgt.

14. Schlauchleitung nach einem der Ansprüche 1 bis 13, wobei das Material der Verstärkungswendel eine höhere Härte aufweist als das Material der Schlauchwandung (2) bzw. der Schaumschicht (4).

15. Schlauchleitung nach einem der Ansprüche 1 bis 14, wobei die Verstärkungswendel (5) aus Metall, insbesondere aus Stahl, besteht bzw. im Wesentlichen besteht.

16. Verfahren zur Herstellung einer Schlauchleitung, insbesondere einer Schlauchleitung (1) gemäß einem der Ansprüche 1 bis 15, wobei zumindest eine Verstärkungswendel (5) bereitgestellt wird, wobei anschließend zur Erzeugung einer Schlauchwandung (2) zumindest eine Schaumschicht (4) durch Extrusion zumindest eines polymeren Kunststoffschaumes auf bzw. um die Verstärkungswendel (5) aufgebracht wird, wobei während der Extrusion eine Relativbewegung zwischen der Verstärkungswendel (5) und zumindest einem Extrusionskopf (11) mit zumindest einer Extrusionsdüse (9) erfolgt, wobei sich der Extrusionskopf (11) und/oder die Extrusionsdüse (9) entlang des Außenumfanges der Verstärkungswendel (5) - insbesondere auf einer im Wesentlichen kreisförmigen Bahn - bewegt und/oder wobei sich die Verstärkungswendel (5) um ihre Längsachse dreht und wobei die Verstärkungswendel (5) zusätzlich entlang ihrer Längsachse kontinuierlich fortbewegt wird, wobei die Extrusion mit der Maßgabe durchgeführt wird, dass die Schaumschicht (4) die Innenoberfläche (6) der Schlauchwandung (2) bildet, und wobei die Herstellung weiterhin mit der Maßgabe durchgeführt wird, dass die radiale Dicke (d_{w}) der Verstärkungswendel (5) geringer ist als die radiale Wandungsdicke (d) der Schaumschicht (4), wobei die radiale Dicke (d_{w}) der Verstärkungswendel (5) zwischen 2 % und 30 % der radialen Wandungsdicke (d) der Schaumschicht (4) beträgt und dass
entweder die Verstärkungswendel (5) über ihren gesamten Querschnittsumfang in die Schlauchwandung (2) bzw. in die Schaumschicht (4) eingebettet ist
oder dass die Verstärkungswendel (5) an der Innenoberfläche (6) der Schlauchwandung (2) bzw. der Schaumschicht (4) angeordnet ist und bezüglich ihres Querschnittsumfanges lediglich teilweise in die Schlauchwandung (2) bzw. in die Schaumschicht (4) eingebettet ist.

17. Verfahren nach Anspruch 16, wobei der polymere Kunststoffschaum während des Extrusionsschrittes aus einem polymeren Kunststoff gebildet wird, wobei der polymere Kunststoff vorzugsweise mittels eines Schäumungsgases und/oder durch Zugabe zumindest eines Schäumungsadditives aufgeschäumt wird.

18. Verwendung einer Schlauchleitung (1) gemäß einem der Ansprüche 1 bis 15, insbesondere hergestellt durch ein Verfahren gemäß einem der Ansprüche 16 oder 17, als Belüftungsschlauch, vorzugsweise als Belüftungsschlauch für Gebäude.

## Claims

1. A hose line (1) - particularly a vent hose - for conveying a fluidic medium, with a hose wall (2) and a fluid channel (3) surrounded by the hose wall (2), wherein the hose wall (2) has at least one foam layer (4) on the basis of at least one polymeric plastic foam, wherein the proportion of the radial thickness (dₛ) of the foam layer (4) in the radial wall thickness (d) of the hose wall (2) amounts to at least 60%, preferably at least 70%, and wherein the hose line (1) has at least one reinforcing coil (5), which is at least sectionally embedded in the hose wall (2), preferably in the at least one foam layer (4) of the hose wall (2), referred to its cross-sectional circumference,
wherein the foam layer (4) forms the inner surface (6) of the hose wall (2),
wherein the radial thickness (d_{w}) of the reinforcing coil (5) is smaller than the radial wall thickness (d) of the foam layer (4), wherein the radial thickness (d_{w}) of the reinforcing coil (5) amounts to between 2% and 30% of the radial wall thickness (d) of the foam layer (4), and wherein
either the reinforcing coil (5) is embedded in the hose wall (2) or in the foam layer (4) over its entire cross-sectional circumference
or the reinforcing coil (5) is arranged on the inner surface (6) of the hose wall (2) or the foam layer (4) and only partially embedded in the hose wall (2) or in the foam layer (4) referred to its cross-sectional circumference.

2. The hose line according to claim 1, wherein the polymeric plastic foam is formed on the basis of at least one thermoplastic resin, preferably on the basis of at least one plastic that is selected from the following group: "polyvinyl chloride, thermoplastic polyurethane, polyethylene."

3. The hose line according to one of claims 1 or 2, wherein the foam layer (4) is in direct contact with the fluidic medium being conveyed in the fluid channel (3) .

4. The hose line according to one of claims 1 to 3, wherein the center point (M) of the reinforcing coil cross section is, referred to the radial wall thickness (d) of the hose wall (2) or the foam layer (4), arranged in the hose wall (2) or in the foam layer (4) in the central half, preferably in the central third, especially in the central fourth and, in particular, centrally or essentially centrally.

5. The hose line according to one of claims 1 to 3, wherein the reinforcing coil (5) is embedded in the hose wall (2) or in the foam layer (4) over less than 95%, particularly over less than 70% or over less than 50%, of its cross-sectional circumference.

6. The hose line according to one of claims 1 to 5, wherein the radial thickness (d_{w}) of the reinforcing coil (5) amounts to between 5% and 30%, preferably between 10% and 25%, of the radial wall thickness (d) of the foam layer (4).

7. The hose line according to one of claims 1 to 6, wherein the inside diameter (dᵢ) of the hose line (1) or the fluid channel (3) amounts to between 3 mm and 250 mm, preferably between 5 mm and 200 mm, particularly between 6 mm and 180 mm.

8. The hose line according to one of claims 1 to 7, wherein the radial wall thickness (d) of the hose wall (2) or the foam layer (4) amounts to between 0.1 mm and 30 mm, particularly between 0.2 mm and 20 mm, preferably between 0.3 mm and 15 mm, especially between 0.4 mm in 12 mm, specifically between 0.5 mm and 10 mm.

9. The hose line according to one of claims 1 to 8, wherein the foam layer (4) has a plurality of pores, wherein at least 65% of the pores, preferably at least 75% of the pores, are realized in the form of closed pores (7), and wherein open pores (8) preferably are arranged in the region of the inner surface (6) of the foam layer (4) bordering on the fluid channel (3).

10. The hose line according to one of claims 1 to 9, wherein the foam layer (4) or the polymeric plastic foam of the foam layer (4) has a hardness of 20 to 55 Shore A, preferably 25 to 50 Shore A, particularly 30 to 50 Shore A.

11. The hose line according to one of claims 1 to 10, wherein the foam layer (4) or the polymeric plastic foam of the foam layer (4) has a density of 0.4 to 0.8 g/cm³, preferably 0.45 to 0.75 g/cm³.

12. The hose line according to one of claims 1 to 11, wherein the foam layer (4) or the polymeric plastic foam of the foam layer (4) has a pore volume of 10 to 90%, preferably 30 to 80%, particularly 35 to 75% and especially 40 to 70%.

13. The hose line according to one of claims 1 to 12, wherein the axial distance (a) between two adjacent reinforcing coil sections (5.1, 5.2) amounts to 1.5-times to 40-times, preferably 2-times to 30-times, particularly 4-times to 20-times and especially 5-times to 15-times, e.g. 10-times, the radial thickness (d_{w}) of the reinforcing coil (5).

14. The hose line according to one of claims 1 to 13, wherein the material of the reinforcing coil has a greater hardness than the material of the hose wall (2) or the foam layer (4), respectively.

15. The hose line according to one of claims 1 to 14, wherein the reinforcing coil (5) consists or essentially consists of metal, particularly steel.

16. A method for producing a hose line, particularly a hose line (1) according to one of claims 1 to 15, wherein at least one reinforcing coil (5) is provided, wherein at least one foam layer (4) is then respectively applied on or around the reinforcing coil (5) by extruding at least one polymeric plastic foam in order to produce a hose wall (2), wherein a relative movement between the reinforcing coil (5) and at least one extrusion head (11) with at least one extrusion die (9) takes place during the extrusion process, wherein the extrusion head (11) and/or the extrusion die (9) moves along the outer circumference of the reinforcing coil (5) - particularly on an essentially circular path - and/or wherein the reinforcing coil (5) rotates about its longitudinal axis and the reinforcing coil (5) also moves continuously along its longitudinal axis, wherein the extrusion is carried out with the provision that the foam layer (4) forms the inner surface (6) of the hose wall (2), wherein the production furthermore is carried out with the provision that the radial thickness (d_{w}) of the reinforcing coil (5) is smaller than the radial wall thickness (d) of the foam layer (4), wherein the radial thickness (d_{w}) of the reinforcing coil (5) amounts to between 2% and 30% of the radial wall thickness (d) of the foam layer (4), and that
either the reinforcing coil (5) is embedded in the hose wall (2) or in the foam layer (4) over its entire cross-sectional circumference
or that the reinforcing coil (5) is arranged on the inner surface (6) of the hose wall (2) or the foam layer (4) and only partially embedded in the hose wall (2) or in the foam layer (4) referred to its cross-sectional circumference.

17. The method according to claim 16, wherein the polymeric plastic foam is formed of a polymeric plastic during the extrusion step, wherein the polymeric plastic preferably is expanded by means of an expansion gas and/or by adding at least one expansion additive.

18. A use of the hose line (1) according to one of claims 1 to 15, which particularly is produced with a method according to one of claims 16 or 17, as a vent hose, preferably as a vent hose for buildings.

## Revendications

1. Tuyau flexible (1) (notamment flexible de ventilation) destiné à conduire un agent fluide, pourvu d'une paroi (2) de flexible et d'un canal (3) de fluide entouré par la paroi (2) de flexible, la paroi (2) de flexible comportant une couche en mousse (4) à base d'au moins une mousse plastique polymère, la part de l'épaisseur (dₛ) radiale de la couche en mousse (4) dans l'épaisseur radiale (d) de paroi de la paroi (2) de flexible s'élevant à au moins 60 %, de préférence, à au moins 70 %, et le tuyau flexible (1) comportant au moins une spire de renfort (5), qui au niveau de sa périphérie de section transversale est incorporée au moins par endroits dans la paroi (2) de flexible, de préférence dans l'au moins une couche en mousse (4) de la paroi (2) de flexible,
la couche en mousse (4) constituant la surface intérieure (6) de la paroi (2) de flexible,
l'épaisseur (d_{w}) radiale de la spire de renfort (5) étant inférieure à l'épaisseur radiale (d) de paroi de la couche en mousse (4), l'épaisseur (d_{w}) radiale de la spire de renfort (5) s'élevant à entre 2 % et 30 % de l'épaisseur radiale (d) de paroi de la couche en mousse (4) et
soit la spire de renfort (5) étant incorporée par l'ensemble de sa périphérie de section transversale dans la paroi (2) de flexible ou dans la couche en mousse (4)
ou la spire de renfort (5) étant placée sur la surface intérieure (6) de la paroi (2) de flexible ou de la couche en mousse (4) et au niveau de sa périphérie de section transversale étant incorporée seulement en partie dans la paroi (2) de flexible ou dans la couche en mousse (4) .

2. Tuyau flexible selon la revendication 1, la mousse plastique polymère étant conçue à base d'au moins une matière thermoplastique, de préférence à base d'au moins une matière plastique sélectionnée dans le groupe comprenant : un polychlorure de vinyle, un polyuréthane thermoplastique, les polyéthylènes.

3. Tuyau flexible selon l'une quelconque des revendications 1 ou 2, la couche en mousse (4) se trouvant en contact direct avec l'agent fluide conduit dans le canal (3) de fluide.

4. Tuyau flexible selon l'une quelconque des revendications 1 à 3, le point médian (M) de la section transversale de la spire de renfort étant placé par rapport à l'épaisseur radiale (d) de paroi de la paroi (2) de flexible ou de la couche en mousse (4) dans la moitié centrale, de préférence dans le tiers central, de manière particulièrement préférentielle dans la quart central et notamment au centre ou sensiblement au centre dans la paroi (2) de flexible ou dans la couche en mousse (4).

5. Tuyau flexible selon l'une quelconque des revendications 1 à 3, la spire de renfort (5) étant incorporée à raison de moins de 95 %, notamment à raison de moins de 70 % ou à raison de moins de 50 % de sa périphérie de section transversale dans la paroi (2) de flexible ou dans la couche en mousse (4).

6. Tuyau flexible selon l'une quelconque des revendications 1 à 5, l'épaisseur (d_{w}) radiale de la spire de renfort (5) s'élevant à entre 5 % et 30 %, de préférence à entre 10 % et 25 % de l'épaisseur radiale (d) de paroi de la couche en mousse (4).

7. Tuyau flexible selon l'une quelconque des revendications 1 à 6, le diamètre intérieur (dᵢ) du tuyau flexible (1) ou du canal (3) de fluide s'élevant à entre 3 mm et 250 mm, de préférence à entre 5 mm et 200 mm, de manière préférentielle, à entre 6 mm et 180 mm.

8. Tuyau flexible selon l'une quelconque des revendications 1 à 7, l'épaisseur radiale (d) de paroi de la paroi (2) de flexible ou de la couche en mousse (4) s'élevant à entre 0,1 mm et 30 mm, notamment à entre 0,2 mm et 20 mm, de préférence à entre 0,3 mm et 15 mm, de manière préférentielle, à entre 0,4 mm et 12 mm, de manière particulièrement préférentielle, à entre 0,5 mm et 10 mm.

9. Tuyau flexible selon l'une quelconque des revendications 1 à 8, la couche en mousse (4) comportant une pluralité de pores, au moins 65 % des pores, de préférence, au moins 75 % des pores étant conçus sous la forme de pores (7) fermés et des pores (8) ouverts étant placés de manière préférentielle dans la zone de la surface intérieure (6) de la couche en mousse (4) qui est adjacente au canal (3) de fluide.

10. Tuyau flexible selon l'une quelconque des revendications 1 à 9, la couche en mousse (4) ou la mousse plastique polymère de la couche en mousse (4) faisant preuve d'une dureté de 20 à 55 shore A, de manière préférentielle, de 25 à 50 shore A et de manière très préférentielle, de 30 à 50 shore A.

11. Tuyau flexible selon l'une quelconque des revendications 1 à 10, la couche en mousse (4) ou la mousse plastique polymère de la couche en mousse (4) faisant preuve d'une densité de 0,4 à 0,8 g/cm³, opportunément de von 0,45 à 0,75 g/cm³.

12. Tuyau flexible selon l'une quelconque des revendications 1 à 11, la couche en mousse (4) ou la mousse plastique polymère de la couche en mousse (4) faisant preuve d'un volume poreux de 10 à 90 %, de manière préférentielle, de 30 à 80 %, de manière particulièrement préférentielle, de 35 à 75 % et de manière tout particulièrement préférentielle, de 40 à 70 %.

13. Tuyau flexible selon l'une quelconque des revendications 1 à 12, l'écart (a) axial entre deux sections (5.1, 5.2) voisines de spire de renfort s'élevant à de 1,5 fois à 40 fois, de manière préférentielle, à de 2 fois à 30 fois, de manière particulièrement préférentielle à de 4 fois à 20 fois et de manière tout particulièrement préférentielle, à de 5 fois à 15 fois, par exemple à 10 fois l'épaisseur(d_{w}) radiale de la spire de renfort (5).

14. Tuyau flexible selon l'une quelconque des revendications 1 à 13, la matière de la spire de renfort faisant preuve d'une dureté supérieure à celle de la matière de la paroi (2) de flexible ou de la couche en mousse (4).

15. Tuyau flexible selon l'une quelconque des revendications 1 à 14, la spire de renfort (5) étant constituée ou étant sensiblement constituée de métal, notamment d'acier.

16. Procédé, destiné à fabriquer un tuyau flexible, notamment un tuyau flexible (1) selon l'une quelconque des revendications 1 à 15, au moins une spire de renfort (5) étant mise à disposition, par la suite, pour créer une paroi (2) de flexible, au moins une couche en mousse (4) étant appliquée par extrusion d'au moins une mousse plastique polymère sur ou autour de la spire de renfort (5), pendant l'extrusion, un déplacement relatif s'effectuant entre la spire de renfort (5) et au moins une tête d'extrusion (11) pourvue d'au moins une tuyère d'extrusion (9), la tête d'extrusion (11) et/ou la tuyère d'extrusion (9) étant déplacée le long de la périphérie extérieure de la spire de renfort (5) (notamment sur un trajet sensiblement circulaire) et/ou la spire de renfort (5) tournant autour de son axe longitudinal et la spire de renfort (5) étant additionnellement déplacée ultérieurement en continu le long de son axe longitudinal, l'extrusion étant réalisée avec le critère que la couche en mousse (4) constitue la surface intérieure (6) de la paroi (2) de flexible, et étant réalisée par ailleurs avec le critère que l'épaisseur (d_{w}) radiale de la spire de renfort (5) soit inférieure à l'épaisseur radiale (d) de paroi de la couche en mousse (4), l'épaisseur (d_{w}) radiale de la spire de renfort (5) s'élevant à entre 2 % et 30 % de l'épaisseur radiale (d) de paroi (d) de la couche en mousse (4) et que
soit la spire de renfort (5) soit incorporée par l'ensemble de sa périphérie de section transversale dans la paroi (2) de flexible ou dans la couche en mousse (4)
ou que la spire de renfort (5) soit placée sur la surface intérieure (6) de la paroi (2) de flexible ou de la couche en mousse (4) et au niveau de sa périphérie de section transversale, soit incorporée seulement en partie dans la paroi (2) de flexible ou dans la couche en mousse (4).

17. Procédé selon la revendication 16, pendant l'étape d'extrusion, la mousse plastique polymère étant constituée à partir d'une matière plastique polymère, la matière plastique polymère étant expansée de préférence au moyen d'un gaz d'expansion et / ou par ajout d'au moins un additif d'expansion.

18. Utilisation d'un tuyau flexible (1) selon l'une quelconque des revendications 1 à 15, fabriqué notamment par un procédé selon l'une quelconque des revendications 16 ou 17 en tant que flexible de ventilation, de préférence, en tant que flexible de ventilation destiné à des bâtiments.
